# EUROPEAN PATENT SPECIFICATION

(11) **EP 0 722 766 B1**
(45) Date of publication and mention of the grant of the patent: **08.02.2006**
(21) Application number: 96100518.8
(22) Date of filing: 16.01.1996
(51) Int. Cl.: B01D 53/86

(54) **Process for the purification of inert gases recycled from reactors for solid state polycondensation of polyester resins**
Verfahren zum Reinigen von wiedergewonnen Inertgasen aus Reaktoren für die Polycondensation von Polyesterharzen in festem Zustand
Procédé de purification des gaz inertes recyclés à partir de réacteurs pour la polycondensation à l'état solide de résines polyesters

(30) Priority: 20.01.1995 IT MI950085
(43) Date of publication of application: 24.07.1996
(73) Proprietor: UOP Sinco S.r.l., 20090 Assago (Milano) (IT)
(72) Inventor: Al Ghatta, Hussain A.K., I-03014 Fiuggi (Frosinone) (IT); Giordano, Dario, I-15057 Tortona (Alessandria) (IT)
(74) Representative: Gerbino, Angelo

(56) References cited:
- EP-A- 0 197 717
- EP-A- 0 222 714
- WO-A-95/02446
- DE-A- 3 527 175
- DE-A- 3 628 572
- DE-C- 3 424 532
- DATABASE WPI Section Ch, Week 8711 Derwent Publications Ltd., London, GB; Class E36, AN 87-073107 & DD-A-240 672 (VEB LEUNA-WERK ULBRICHT)

## Description

The present invention regards a process for the purification of inert washing gases used in solid state polycondensation or polyaddition reactors for aromatic polyester resins.

In a previous patent application of the same applicant (WO-A-95 02 446) there is described a process for the purification of inert gases coming from a polycondensation reactor of polyester resin (polyethylene terephthalate, copolymers wherein up to 20% of terephthalic acid units are substituted by units deriving from other bicarboxylic acids such as isophtalic acid, polybutylene terephthalate and others) in which the gas is passed on a catalyst bed containing Pt or a mixture of Pt and Pd supported on an inert porous support (gamma alumina with porosity of 0.4-0.6 cm³/g) maintained at a temperature between 250° and 600°C, preferably between 250° and 350°C and operating in the presence of a quantity of oxygen or gas containing oxygen stoichiometric or slightly superior (up to 10 ppm) with respect to the impurities from organic compounds present in gases.

The description of the above-mentioned application is herewith incorporated by reference.

The stoichiometry of the reaction is controlled inserting at the exit of the catalyst bed an analyzer of oxygen capable to detect ppm of oxygen with response analysis time inferior to about 5 sec. In particular, a Zr oxide oxygen sensor is used.

The purified gas is recycled to the reactor after the drying directed to eliminate the water formed in the oxidation stage.

The treated gas is preferably nitrogen or gas containing nitrogen.

It has been found that it is possible to operate in the oxidation phase of the organic impurities using quantities of oxygen sensibly superior to the stoichiometric one, correspondent to 10 and up to 250 ppm of oxygen present in the gas at the exit of the oxidation reactor.

It has been found that the presence in the recycled gas of a quantity of oxygen comprised between about 10 and 250 ppm does not cause yellowing or undesired degradation reaction in the polymer treated in the polycondensation reactor.

### Example

Example 1 of application WO-A-95 02 446 is repeated with the difference that a quantity of air is used corresponding to a quantity of oxygen in excess on the stoichiometric one equal to 6,12,44, 112 and 250 ppm in the gas at the exit of the oxidation reactor.

It was not noted yellowing in the polymer (PET), nor variation of the I.V. that remained at a value comprised between 0.792 and 0.8 dl/g in the various tests.

## Claims

1. Process for the purification from organic impurities of an inert gas stream exiting a solid state polycondensation reactor of an aromatic polyester resin, wherein the gas is added with oxygen or gas containing oxygen and passed on a catalyst bed-containing Pt or a mixture of Pt and Pd supported on an inert porous support at a temperature comprised between 250°C and 600°C, wherein the quantity of the added oxygen is in such an excess over the stoichiometric amount referred to the impurities present in the gas that the gas at the exit of the catalytic bed contains more than 10 ppm oxygen and up to 250 ppm, and the purified gas is recycled to the reactor after drying to remove the water formed in the oxidation stage, **characterised in that** a deoxidation stage with hydrogen is not present before recycle of the purified gas to the reactor.

2. Process according to claim 1, in which the reaction of oxidation is monitored by inserting at the exit of the catalyst bed an analyzer of oxygen capable to analyse ppm of oxygen with response time of analysis inferior to about 5 sec.

3. Process according to claim 1, in which the polyester resin is selected among polyethylene terephthalate copolymers, wherein up to 20% of terephthalic acid units are substituted with units of isophtalic acid.

4. Process according to claim 1, in which the inert gas is nitrogen or contains nitrogen and is recycled to the reactor after drying of the water formed in the oxidation stage.

5. Process according to any of preceding claims, in which the catalyst is formed of Pt and Pd supported on a gamma alumina having surface area superior to 70/80 m²/g and porosity of 0.4-0.6 cm³/g.

6. Process according to claim 5, in which the temperature of the catalyst bed is maintained at a temperature comprised between 250° and 350°C.

7. Process according to claim 2, in which the analyzer is a zirconium oxide oxygen sensor.

8. Process according to claim 7, in which air is used as gas containing oxygen.

## Revendications

1. Procédé de purification d'impuretés organiques d'un courant de gaz inerte sortant d'un réacteur de polycondensation à l'état solide d'une résine de polyester aromatique, dans lequel le gaz est ajouté à de l'oxygène ou un gaz contenant de l'oxygène et passé sur un lit de catalyseur contenant du Pt ou un mélange de Pt et de Pd supporté sur un support poreux inerte à une température comprise entre 250° et 600 °C, dans lequel la quantité de l'oxygène ajouté est en un tel excès par rapport à la quantité stoechiométrique se référant aux impuretés présentes dans le gaz que le gaz à la sortie du lit catalytique contient plus de 10 ppm d'oxygène et jusqu'à 250 ppm, et le gaz purifié est recyclé vers le réacteur après séchage pour éliminer l'eau formée dans l'étage d'oxydation, **caractérisé en ce qu'**un étage de désoxydation par de l'hydrogène n'est pas présent avant le recyclage du gaz purifié vers le réacteur.

2. Procédé selon la revendication 1, dans lequel la réaction d'oxydation est surveillée en insérant à la sortie du lit de catalyseur un analyseur d'oxygène capable d'analyser les ppm d'oxygène avec un temps de réponse d'analyse inférieur à environ 5 s.

3. Procédé selon la revendication 1, dans lequel la résine de polyester est choisie parmi les copolymères de polyéthylène téréphtalate, dans lequel jusqu'à 20 % de motifs acide téréphtalique sont substitués par des motifs d'acide isophtalique.

4. Procédé selon la revendication 1, dans lequel le gaz inerte est de l'azote ou contient de l'azote et est recyclé vers le réacteur après séchage de l'eau formée dans l'étage d'oxydation.

5. Procédé selon l'une quelconque des revendications précédentes, dans lequel le catalyseur est formé de Pt et de Pd supporté sur une gamma alumine ayant une surface spécifique supérieure à 70/80 m²/g et une porosité de 0,4 à 0,6 cm³/g.

6. Procédé selon la revendication 5, dans lequel la température du lit de catalyseur est maintenue à une température comprise entre 250° et 350° C.

7. Procédé selon la revendication 2, dans lequel l'analyseur est un capteur d'oxygène à l'oxyde de zirconium.

8. Procédé selon la revendication 7, dans lequel de l'air est utilisé en tant que gaz contenant de l'oxygène.

## Patentansprüche

1. Verfahren zur Reinigung eines Inertgasstroms, der aus einem Festphasenpolykondensationsreaktor für ein aromatisches Polyesterharz austritt, von organischen Verunreinigungen, wobei zum Gas Sauerstoff oder ein sauerstoffhaltiges Gas hinzugefügt und das Gas bei einer Temperatur zwischen 250°C und 600°C durch ein Katalysatorbett, enthaltend Pt oder eine Mischung aus Pt und Pd, die auf einem inerten porösen Träger getragen werden, geleitet wird, wobei die Menge des hinzugefügten Sauerstoffs die stöchiometrische Menge, bezogen auf die im Gas vorhandenen Verunreinigungen, in einem solchen Maß übertrifft, dass das Gas am Ausgang des katalytischen Betts mehr als 10 ppm und bis zu 250 ppm Sauerstoff enthält und das gereinigte Gas nach der Trocknung zur Entfernung des in der Oxidationsstufe gebildeten Wassers zum Reaktor zurückgeführt wird, **dadurch gekennzeichnet, dass** vor der Rückführung des gereinigten Gases zum Reaktor keine Desoxidationsstufe mit Wasserstoff vorhanden ist.

2. Verfahren gemäß Anspruch 1, wobei die Oxidationsreaktion überwacht wird, indem am Ausgang des Katalysatorbetts ein Sauerstoffanalysator eingefügt wird, der fähig ist, ppm Sauerstoff mit einer Analysenansprechzeit von unter etwa 5 sec zu analysieren.

3. Verfahren gemäß Anspruch 1, wobei das Polyesterharz aus Polyethylenterephthalat-Copolymeren ausgewählt ist, bei denen bis zu 20% der Terephthalsäureeinheiten durch Isophthalsäureeinheiten ersetzt sind.

4. Verfahren gemäß Anspruch 1, wobei das Inertgas Stickstoff ist oder Stickstoff enthält und nach dem Trocknen des in der Oxidationsstufe gebildeten Wassers zum Reaktor zurückgeführt wird.

5. Verfahren gemäß irgendeinem der vorhergehenden Ansprüche, wobei der Katalysator aus Pt und Pd gebildet ist, die auf Gamma-Aluminiumoxid mit einer Oberfläche von mehr als 70/80 m²/g und einer Porosität von 0,4 - 0,6 cm³/g getragen werden.

6. Verfahren gemäß Anspruch 5, wobei die Temperatur des Katalysatorbetts bei einer Temperatur zwischen 250° und 350°C gehalten wird.

7. Verfahren gemäß Anspruch 2, wobei der Analysator ein Zirconiumoxid-Sauerstoffsensor ist.

8. Verfahren gemäß Anspruch 7, wobei als sauerstoffhaltiges Gas Luft verwendet wird.
